# EUROPÄISCHE PATENTSCHRIFT

(11) **EP 1 060 869 B1**
(45) Veröffentlichungstag und Bekanntmachung des Hinweises auf die Patenterteilung: **05.11.2003**
(21) Anmeldenummer: 99111788.8
(22) Anmeldetag: 18.06.1999
(51) Int. Cl.: B29C 70/34, B29B 11/16

(54) **Verfahren zum Herstellen eines funktionellen Hochleistungs-Schalenbauteils, Platine zum Durchführen des Verfahrens, und nach dem Verfahren hergestellter Hochleistungs-Schalenbauteil**
Method for manufacturing a functional high performance shell , plate for performing the method, and high performance shell manufactured by said method
Procédé pour la fabrication d'une coque haute performance, platine pour la mise en oeuvre du procédé et coque haute performance obtenue par ce procédé

(43) Veröffentlichungstag der Anmeldung: 20.12.2000
(73) Patentinhaber: Blechformwerke Bernsbach AG, 08315 Bernsbach (DE); ISE Innomotive Systems Europe GmbH, 51702 Bergneustadt (DE)
(72) Erfinder: Müller, Hartwig, Dr.-Ing., 09126 Chemnitz (DE); Schweier, Robert, Dipl-Ing., 00221 Neukirchen (DE)
(74) Vertreter: Grünecker, Kinkeldey, Stockmair & Schwanhäusser Anwaltssozietät

(56) Entgegenhaltungen:
- EP-A- 0 356 072
- EP-A- 0 375 280
- WO-A-98/52793
- DE-U- 29 813 152

## Beschreibung

Die Erfindung betrifft ein Verfahren gemäß dem Oberbegriff des Anspruchs 1, eine Platine gemäß dem Oberbegriff des Anspruchs 8 und einen strukturellen Hochleistungs-Schalenbauteil gemäß dem Oberbegriff des Anspruchs 10.

Ein aus DE-U-298 13 152 bekannter Überrollbügel für Kraftfahrzeuge ist ein struktureller Hochleistungs-Schalenbauteil aus thermoplastischem Faserverbundkunststoff, der durch die Umformung belastungsorientiert, d.h. auf unterschiedliche Belastungsfälle abgestimmt, wird, und erheblich leichter als herkömmliche Metall-Überrollbügel ist. Das Verformungsverhalten und/oder die Verformungsfestigkeit des Überrollbügels ergibt sich hauptsächlich aus zwei Faktoren: der Formgebung durch das Umformen, d.h. spezielle Sicken oder integrierte Verstärkungselemente, und die Art und Zusammensetzung des thermoplastischen Faserverbundkunststoffes, d.h. die Art der textilen Flächengebilde und die Art des thermoplastischen Kunststoffes, die miteinander zu im Schalenbauteil im wesentlichen gleichbleibender Wandstärke führen. Es wird wenigstens eine mehrere übereinanderliegende textile Flächengebilde (z.B. aus Glasfasern oder Kohlenstoffasern in einer bestimmten Web-, Gelege-, Wirk- oder Strickart) in einer thermoplastischen Kunststoffmatrix enthaltende Platine verwendet, die durchgehend schon im wesentlichen die Wandstärke des späteren Schalenbauteils hat. Gegebenenfalls werden zum Erzielen der erforderlichen Wandstärke mehrere aufeinandergelegte Platinen umgeformt. Um den Hochleistungs-Schalenbauteil auf den schwierigsten Belastungsfall oder die stärkste Belastungsart bzw. -richtung auszulegen, müssen die Platinen-Wandstärke und die Art der textilen Flächengebilde bzw. der thermoplastischen Kunststoffmatrix so gewählt sein, daß in jedem auch durch die Verformung versteiften Bereich des Hochleistungs-Schalenbauteils die gewünschten Anforderungen erfüllt werden. Dies bedingt jedoch in anderen Bereichen des Hochleistungs-Schalenbauteils, für welche geringere oder andere Belastungsanforderungen gelten, eine Überdimensionierung bzw. Überqualifizierung und eine Materialvergeudung (an textilen Flächengebilden und/oder thermoplastischer Kunststoffmatrix) und somit unnötiges Gewicht. Im Hinblick auf die extremen Leichtbau-Anforderungen für solche Hochleistungs-Schalenbauteile, die zwar erheblich leichter sind als gleichwertige metallische Bauteile, bedeutet dies jedoch einen Nachteil. Dieser Nachteil ist insbesondere im Fahrzeug- oder Karosseriebau von Kraftfahrzeugen, Flugzeugen oder Schiffen oder Fahrrädern besonders schwerwiegend, weil es in diesen Gebieten auf jedes eingesparte Gramm und auf möglichst geringe Materialkosten ankommt. Dabei ist zu berücksichtigen, daß die Ausgangsplatinen bis dato nur mit konstanten Wandstärken erhältlich sind.

Moderne Entwicklungen im Fahrzeug- bzw. Karosserieteile-Bau haben zum Einsatz sogenannter "tailored blanks", also maßgeschneiderter Zuschnitte geführt. Dies bedeutet, daß der meist ebene Zuschnitt aus Metallblech Bereiche unterschiedlicher Wandstärken aufweist, indem Blechabschnitte unterschiedlicher Wandstärken und Materialspezifikationen, z.B. durch Laserschweißen, an aneinanderstoßenden Kanten miteinander verbunden sind. Wird ein solcher Zuschnitt dann zu einem Fahrzeug- oder Karosserieteil umgeformt, dann lassen sich in diesem nicht nur durch Umformung, sondern auch durch die Wandstärken und Spezifikationen deutlich unterschiedliche Belastungsanforderungen erfüllen. In analoger Weise Platinenabschnitte aus thermoplastischem Verbundkunststoff mit unterschiedlichen Wandstärken und/oder Eigenschaften stumpf aneinanderzufügen, führt allerdings noch zu keinen brauchbaren Ergebnissen.

Der Erfindung liegt die Aufgabe zugrunde, ein Verfahren der eingangs genannten Art, sowie eine zum Durchführen des Verfahrens geeigneten Platine und einen Hochleistungs-Schalenbauteil, hergestellt gemäß dem Verfahren und unter Verwendung der Platine, anzugeben, mit denen auf verfahrenstechnisch einfache Weise trotz einer Belastungsoptimierung extremer Leichtbau ermöglicht wird.

Die gestellte Aufgabe wird erfindungsgemäß mit den Merkmalen des Verfahrensanspruchs 1, des Gegenstandsanspruchs 8 und des Gegenstandsanspruchs 10 gelöst.

Durch Anfertigen der Mehrlagen-Platine vor dem Umformen und durch die Positionierung der wenigstens einen kleineren Verstärkungsplatine auf der Grundplatine kann verfahrenstechnisch einfach für eine belastungsorientierte Gestaltung des späteren Hochleistungs-Schalenbauteils extremer Leichtbau verwirklicht werden. Die Grundplatine braucht nur eine Zusammensetzung und Wandstärke zu haben, mit denen die Grundfestigkeit im Schalenbauteil ohne Überdimensionierung, Materialvergeudung oder zusätzliches Gewicht gewährleistet ist. Die Grundplatine fungiert als Platzhalter zum Positionieren der wenigstens einen Verstärkungsplatine, wobei durch die Plastifzierung vor der Umformung und die stoffschlüssige Verbindung bei der Umformung eine monolithische bzw. homogene Kraftübertragungsstruktur erzielt wird. Die Bereiche der Mehrlagenplatine, die im späteren Hochleistungs-Schalenbauteil besonderen Belastungsarten oder -richtungen unterworfen werden, sind dank der Verstärkungsplatine von vornherein im Hinblick auf die belastungsorientierte Ausbildung vorbereitet. In jedem Bereich der Mehrlagen-Platine ist eine Komposition vorgesehen, die genau an die zu erwartenden Belastungsfälle- und -richtungen im späteren Hochleistungs-Schalenbauteil angepaßt ist, wobei die größere Wandstärke und/oder die auf die höherwertigen Belastungsanforderungen ausgerichtete Zusammensetzung in der Mehrlagen-Platine tatsächlich nur dort vorgesehen sind, wo sie später gebraucht werden. Dies vermeidet eine Materialvergeudung und führt zu extremem Leichtbau. Das Verfahren ist bevorzugt auf die Großserienproduktion von Schalenbauteilen abgestellt.

Die Mehrlagenplatine, die auf der Grundplatine aufgebaut ist und die Verstärkungsplatinen nur im jeweils vorbestimmten Bereich, z.B. durch FEM-Berechnungen definiert, für die dort erforderliche Wandstärke bzw. Zusammensetzung aufweist, ist ein auf einfache Weise vorfertigbares Produkt, das wie herkömmliche Platinen zur Umformung eingesetzt oder sogar erst unmittelbar vor der Umformung bzw. beim Plastifizieren zur Umformung hergestellt ist.

Der Hochleistungs-Schalenbauteil aus dem thermoplastischen Faserverbundkunststoff ist nicht nur belastungsorientiert ausgebildet, und zwar durch die variierende Wandstärke, die variierende innere Struktur und die Materialauswahl im Zusammenspiel mit der durch das Umformen hergestellten Geometrie, sondern erfüllt die Anforderungen an extremen Leichtbau in optimaler Weise, weil keine Bereiche mit überflüssigem Material und unnötigem Gewicht vorhanden sind. Bevorzugtes Anwendungsgebiet für solche Hochleistungs-Schalenbauteile ist der Automobil-Karosseriebau, sind Überrollbügel oder Sitzschalen für Automobile, jedoch auch Flugzeugbestandteile, Schiffsbestandteile oder Fahrradrahmenkomponenten. Die in der Mehrlagenplatine enthaltenen textilen Flächengebilde sind aus gerichteten Endlosfasem oder -fäden hergestellt, weil nur damit hohe Belastungsanforderungen zu erfüllen sind.

Zweckmäßig wird jede Verstärkungsplatine nach dem Positionieren durch Erwärmen bis zur Plastifizierung an der ebenfalls plastifizierten Grundplatine fixiert, oder gegebenenfalls vor dem Plastifzieren durch Kleben fixiert. Die Mehrfachplatine läßt sich dann einfach ohne Gefahr von Fehlpositionierungen der Verstärkungsplatine(n) lagern, transportieren und manipulieren. Da die Mehrlagenplatine aus einzelnen Platinen gefügt wird, ist ein praktisch unbeschränkter Freiheitsgrad für die Form, Größe, Wandstärke und Art der Verstärkungsplatinen gegeben, für die die wenigstens eine Grundplatine als der Platzhalter fungiert.

Um innerhalb der Mehrlagenplatine die einzelnen Teile an den vorbestimmten Positionen zuverlässig festzulegen, kann es zweckmäßig sein, nach dem Plastifizieren unter Druckeinwirkung zu fixieren, damit der thermoplastische Kunststoff eine Verbindung herstellt. Dabei bietet der Thermoplast den Vorteil, eine Fehlpositionierung durch neuerliches Plastifizieren korrigieren zu können.

Da es für die endgültige Gestaltfestigkeit des Schalenbauteils wichtig ist, die Mehrlagenplatine ohne nennenswerte Kompression umzuformen, um eine Verdrängung des thermoplastischen Kunststoffes und/oder Verlagerung oder Fehlorientierung der Fasern in den textilen Flächengebilden zu vermeiden, erfolgt die Umformung in einem Umformhohlraum, der auf den Querschnittsverlauf bzw. den Verlauf der Wandstärkenvariationen im Schalenbauteil abgestimmt ist. Dies bedeutet, daß für das Verfahren bewußt eine gegenseitige Abstimmung zwischen der Mehrlagenplatine und dem Formhohlraum vorgenommen wird.

Verfahrenstechnisch einfach wird die Mehrlagenplatine in ebener Form vorgefertigt, gegebenenfalls bereits beim Hersteller solcher Platinen, und erst zum Umformen entweder außerhalb oder im Formhohlraum auf einer Hälfte der Form plastifiziert.

Alternativ kann die Mehrlagenplatine auch erst beim Plastifizieren hergestellt werden, wobei sich dann die Haftung des thermoplastischen Kunststoffes zwischen den Platinenteilen nutzen läßt.

Schließlich wäre es auch möglich, die Mehrlagenplatine erst nach dem Plastifizieren der Grundplatine und der wenigstens einen Verstärkungsplatine außerhalb der Form oder im Formhohlraum zu fügen und dabei die Adhäsion zu nutzen.

Im Hinblick auf die belastungsoptimierte Ausbildung des Schalenbauteils sollte die Mehrlagenplatine so vorgefertigt werden, daß sich die wenigstens eine, an der Grundplatine positionierte Verstärkungsplatine von der Grundplatine durch wenigstens eine der folgenden strukturellen Eigenschaften unterscheidet: die Form und Größe der Verstärkungsplatine, den thermoplastischen Kunststoff in der Kunststoffmatrix, die Art des Fasermaterials, die Art der textilen Flächengebilde und die Faserrichtung in allen oder in einzelnen textilen Flächengebilden.

In dem Hochleistungs-Schalenbauteil aus thermoplastischem Faserverbundkunststoff können sich die Bereiche, die größere Wandstärke als die Umgebung des Schalenbauteils haben, zusätzlich durch wenigstens eine der nachfolgenden strukturellen Eigenschaften von den Eigenschaften in den dünnwandigeren Bereichen des Schalenbauteils unterscheiden: Größe und Form der dickwandigeren Bereiche, den thermoplastischen Kunststoff in der Kunststoffmatrix, die Art des Fasermaterials in den textilen Flächengebilden, die Art der textilen Flächengebilde oder die Faserrichtung in einzelnen oder allen Flächengebilden, die in der Verstärkungsplatine enthalten sind.

Bevorzugt enthalten die textilen Flächengebilde endlose Fasern oder Fäden aus Glas oder Kohlenstoff oder einem anderen hochfesten Material, das in der Lage ist, mit thermoplastischem Kunststoff einen innigen Verbund einzugehen.

Anhand der Zeichnung werden Verfahrensvarianten und gegenständliche Ausführungen der Erfindung erläutert. Es zeigen:
- Fig. 1: eine Draufsicht auf einen Hochleistungs-Schalenbauteil aus thermoplastischem Faserverbundkunststoff, z.B. einen Automobil-Überrollbügel,
- Fig. 2: einen Vertikalschnitt in der Ebene II-II in Fig. 1,
- Fig. 3: einen Horizontalschnitt in der Ebene III-III von Fig. 1,
- Fig. 4: eine Draufsicht auf eine Mehrlagenplatine, wie sie zum Herstellen des Hochleistungs-Schalenbauteils etwa der Fig. 1 verwendbar ist,
- Fig. 5: einen Schnitt in der Ebene V-V von Fig. 4,
- Fig. 6: schematisch mehrere Stationen bzw. Schritte bei der Herstellung eines Hochleistungs-Schalenbauteils,
- Fig. 7: schematisch eine andere des Verfahrensablaufes,
- Fig. 8: eine andere Art des Verfahrensablaufes,
- Fig. 9: einen Vorbereitungsschritt bei der Herstellung einer Mehrlagenplatine, und
- Fig. 10: eine Seitenansicht der gemäß Fig. 9 hergestellten Mehrlagenplatine.

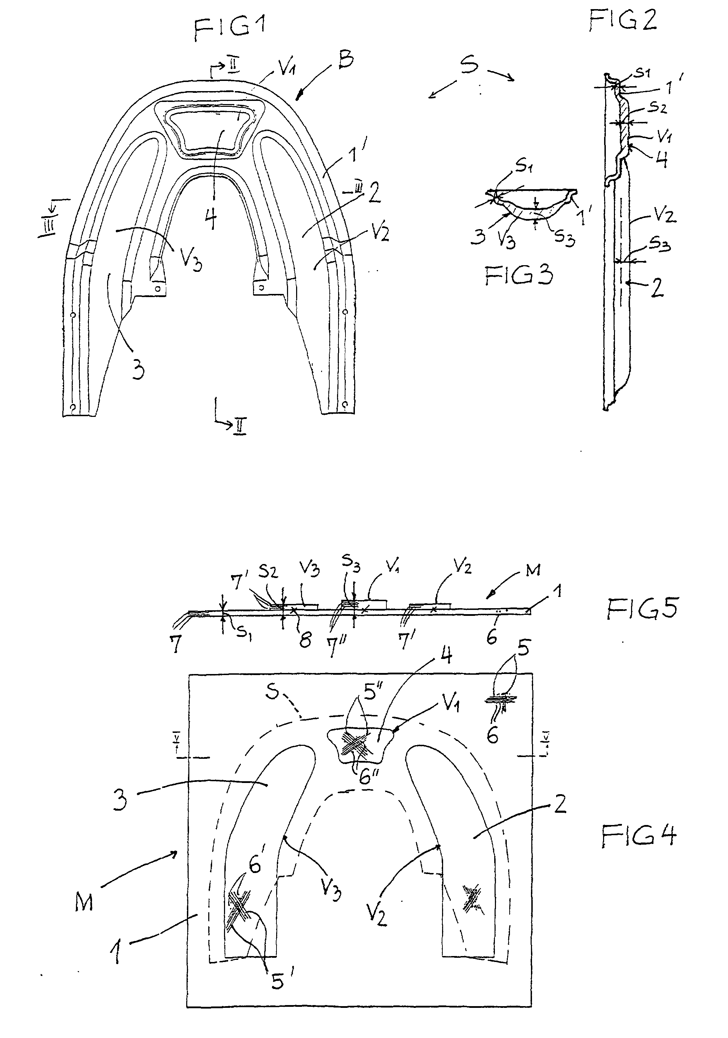

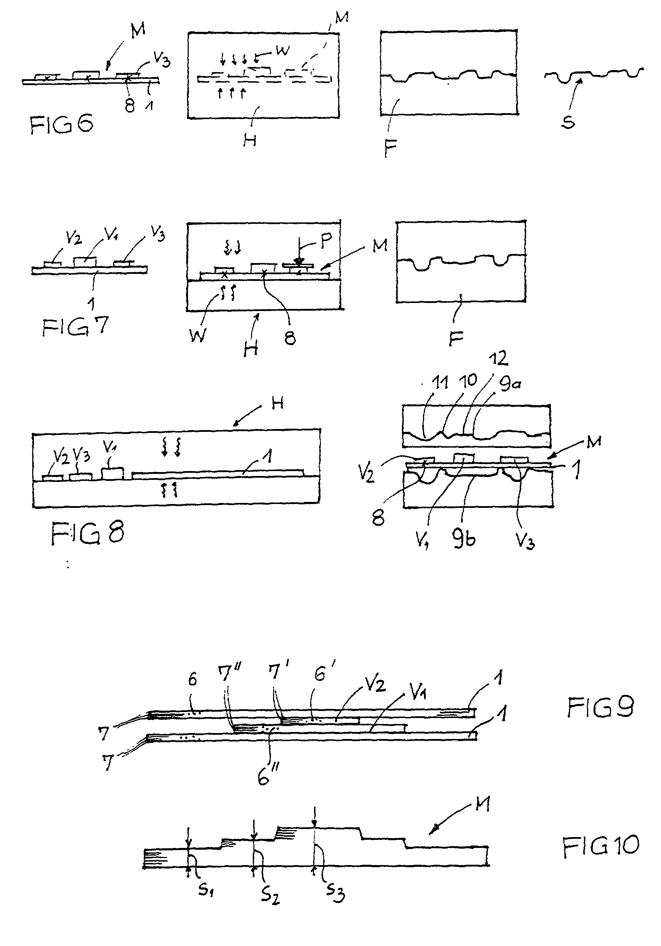

Ein struktureller Hochleistungs-Schalenbauteil S in den Fig. 1 und 2, beispielsweise ein Überrollbügel B für ein Automobil, ist, z.B. im Zuge einer Großserienproduktion, in einem nicht gezeigten Formhohlraum unter Einwirkung von Druck aus einer im wesentlichen ebenen Mehrlagenplatine M gemäß den Fig. 4 und 5 hergestellt, derart, daß er im späteren Gebrauch unterschiedlichen Belastungsarten oder Anforderungen gerecht wird, d.h. integrierte Bereiche aufweist, die jeweils auf spezielle Belastungs-Arten, Belastungs-Richtungen, oder Belastungs-Fälle abgestimmt sind. Der Hochleistungs-Schalenbauteil S besteht aus thermoplastischem Faserverbundkunststoff geformt und besitzt einen Grundkörper 1' mit einer Wandstärke s1 sowie integrierte Bereiche 2 und 3 (beispielsweise Sicken) und einen annähernd trapezförmigen verformten Verstärkungsbereich 4, die größere Wandstärken s2 und s3 haben als der U-förmige Grundkörper-Bereich 1'. Um den Belastunganforderungen gerecht zu werden, hat der Hochleistungs-Schalenbauteil S eine bestimmte geometrische Querschnittsform oder einen Querschnittsverlauf mit Sicken, Wellungen, Profilierungen und dgl. wobei zusätzlich in diesen Bereichen auch die Wandstärke verschieden sein kann von der Wandstärke im Grundkörperbereich 1', und gegebenenfalls sogar nicht nur die Wandstärke, sondern auch die Art des thermoplastischen Faserverbund-Kunststoffes, was später erläutert werden wird.

In Fig. 1 sind in dem Hochleistungs-Schalenbauteil S in den Bereichen 2, 3, 4 mitverformte Verstärkungsplatinen V1, V2, V3 stoffschlüssig integriert, und zwar entweder an der Vorderseite und/oder an der Hinterseite. Im Vertikalschnitt der Fig. 2 ist zu erkennen, daß die Wandstärke s1 im Grundkörperbereich 1' geringer ist, als im Bereich 4, wo sie s2 betragen kann, oder im Bereich 2, wo sie wegen der Verstärkungsplatine V2 s3 betragen kann. Ähnlich ist in dem Horizontalschnitt der Fig. 3 zu erkennen, daß die Wandstärke s1 im Grundkörperbereich 1' kleiner ist als die Wandstärke s3 beispielsweise in den Bereichen 2, 3, mit den Verstärkungsplatinen V2, V3.

Mit dieser Ausbildung des Hochleistungs-Schalenbauteils S aus dem thermoplastischen Faserverbundkunststoff wird nicht nur eine belastungsoptimierte Gestaltung erzielt, d.h., in den Bereichen 2, 3, 4 können andere und stärkere Belastungen aufgenommen werden, als im Grundkörperbereich 1', sondern wird diese belastungsoptimierte Ausbildung mit extremen Leichtbau erzielt, weil in den Bereichen, die weniger belastet werden, beispielsweise im Grundkörperbereich 1', keine überflüssige Materialanhäufung und kein unnötiges Gewicht vorgesehen sind, sondern jeder Bereich des Hochleistungs-Schalenbauteils gerade so dimensioniert und ausgebildet ist, wie es den zu erwartenden Belastungen entspricht.

Wie erwähnt, wird der Hochleistungs-Schalenbauteil S gemäß den Fig. 1 bis 3 hergestellt aus wenigstens einer Mehrlagenplatine M gemäß den Fig. 4 und 5, die in im wesentlichen ebener Form vorgefertigt sein kann oder vor dem Umformen außerhalb des Formhohlraums oder sogar erst im Formhohlraum vorgefertigt wird. Die Mehrlagenplatine M besteht aus einer großen Grundplatine 1 mit im wesentlichen gleichbleibender Wandstärke s1 und wenigstens einer darauf positionierten und fixierten, kleineren Verstärkungsplatine V1, V2, V3 beliebiger Form und mit der gleichbleibenden Wandstärke beispielsweise s3 bzw. s2. Die Grundplatine 1 und die Verstärkungsplatinen V1, V2, V3 bestehen jeweils aus mehreren übereinanderliegenden textilen Flächengebilden 7, 7', 7" mit gerichteten Endlosfasem, die in ihrer Anzahl, Art und Materialauswahl gleich oder verschieden sein können, und einer thermoplastischen Kunststoffmatrix 6, 6', 6", wobei auch die Kunststoffmatrixwerkstoffe untereinander gleich oder voneinander verschieden sein können.

Der Umriß des späteren Hochleistungs-Schalenbauteils S (zuzüglich des Einziehmaßes beim Umformen) ist gestrichelt angedeutet. In den Bereichen 2, 3, 4 des Hochleistungs-Schalenbauteils S sind die Verstärkungsplatinen V1, V2, V3 positioniert und zweckmäßigerweise fixiert. Das Fixieren kann beim oder nach dem Positionieren erfolgen durch Verkleben oder dadurch, daß die Grundplatine 1 und die Verstärkungsplatinen V1, V2, V3 durch Wärmeeinwirkung plastifiziert und über den thermoplastischen Kunststoff miteinander, zweckmäßigerweise vollflächig, verbunden werden. Sowohl beim Kleben als auch beim Verbinden in plastifiziertem Zustand kann Druck ausgeübt werden, um die Verbindung haltbar zu machen.

Sofern die Grundplatine 1 und die Verstärkungsplatinen V1, V2, V3 nicht untereinander gleiche Eigenschaften haben, können sie sich in einer oder mehreren der folgenden strukturellen Eigenschaften voneinander unterscheiden: Der Anzahl und dem Zwischenabstand der textilen Flächengebilde 7, 7', 7", der jeweiligen Wandstärke, im thermoplastischen Kunststoff in der Kunststoffmatrix 6, 6', 6", der Art des Fasermaterials bzw. der gerichteten Endlosfasem 5, 5', 5" in den textilen Flächengebilden 7, 7', 7", d.h. in der Faser- oder Fadenstärke, Dichte, und dem Fasermaterial, z.B. Glas, Kohlenstoff oder ähnliche hochfeste Materialien, in der Art der textilen Flächengebilde 7, 7', 7", z.B. Gewebe, Gewirke, Gelege, Gestrick, der jeweiligen Webart, Legart, Wirkwese oder Strickweise und in den Faserrichtungen der Fasem 5, 5', 5", d.h. den jeweiligen Winkeln zwischen den Fasern 5, 5', 5" in den textilen Flächengebilden.

Wie bei 8 angedeutet, sind die Verstärkungsplatinen V1, V2, V3 an der Grundplatine 1 an vorbestimmten Positionen fixiert, z.B. durch eine Klebung oder durch den thermoplastischen Kunststoff selbst, der durch vorhergehendes Plastifizieren diese Verbindung herstellt. Je nach Bedarf können die Verstärkungsplatinen an nur einer Oberfläche der Grundplatine 1 vorgesehen sein, oder an beiden. Femer können durchaus auch mehrere unterschiedlich konfigurierte und ausgebildete Verstärkungsplatinen übereinander angeordnet werden, so daß nur die jeweils unterste Verstärkungsplatine an der Grundplatine 1 fixiert ist, während jede weitere zumindest auf der darunterliegenden Verstärkungsplatine fixiert und positioniert ist. Es ist ferner nicht unbedingt erforderlich, die Randbereiche der Grundplatine freizulassen und nur innerhalb des Umrisses der Grundplatine Verstärkungsplatinen anzuordnen. Vielmehr könnten auch in den Randbereichen der Grundplatine Verstärkungsplatinen vorgesehen werden, falls dies für die späteren Belastungsanforderungen erforderlich sein sollte.

In Fig. 6 ist ein Verfahrensablauf zum Herstellen eines strukturellen Hochleistungs-Schalenbauteils S aus thermoplastischem Faserverbundkunststoff angedeutet. Die Mehrlagenplatine M ist bereits vorgefertigt (es könnten auch mehrere Mehrlagenplatinen bei der Herstellung zusammengeführt werden) und wird in eine Heizvorrichtung H eingebracht, in der sie mit Wärme W beaufschlagt und durchgehend plastifiziert ist. Dann wird die plastifizierte Mehrlagenplatine in eine Form F eingebracht, in der der Umformvorgang unter Druck stattfindet. Das Resultat ist der Hochleistungs-Schalenbauteil S, der gegebenenfalls am Umfang noch beschnitten wird.

Alternativ wird gemäß Fig. 7 zunächst eine Grundplatine 1 vorbereitet, auf der die wenigstens eine Verstärkungsplatine V1, V2, V3 positioniert wird. Dieses Vorfabrikat wird in die Heizvorrichtung H eingebracht und unter Wärme plastifiziert, um die Verstärkungsplatine-V1, V2, V3 an der Grundplatine 1 zu fixieren. Gegebenenfalls wird mittels einer Preßeinrichtung P moderater Druck aufgebracht, um die Verbindung vollflächig und haltbar herzustellen. Die plastifizierte Mehrlagenplatine M wird dann in die Form überführt und umgeformt oder zuerst abgekühlt und zwischengelagert.

Alternativ werden gemäß Fig. 8 die Grundplatine 1 und die wenigstens eine Verstärkungsplatine V1, V2, V3 nebeneinander oder übereinander in die Heizvorrichtung H eingebracht, und durch Wärme W plastifiziert. Dann wird, z.B. beginnend mit der plastifizierten Grundplatine 1, diese in die Form F eingelegt, ehe nachfolgend die ebenfalls plastifizierte Verstärkungsplatine V1, V2, V3 auf der Grundplatine 1 positioniert und fixiert wird. Die Form F hat beispielsweise zwei Formhälften, die zueinander passende Formhohlraumteile 9a, 9b aufweisen. Der Querschnittsverlauf des Formhohlraumes 9a, 9b ist von vom herein auf den variierenden Wandstärkenverlauf der Mehrlagenplatine M, die hier erst in der Form hergestellt wird, abgestimmt, z.B. durch entsprechende Formhohlraumteile 10, 11, 12, so daß das spätere Umformen ohne nennenswerte Kompression des Faserverbundkunststoffes oder Verdrängen des thermoplastischen Kunststoffes erfolgt.

Gemäß Fig. 9 wird auf eine Grundplatine 1, die mehrere textile Flächengebilde 7 enthält, eine kleinere Verstärkungsplatine V1 aufgelegt, die mehrere textile Flächengebilde 7" enthält, und auf diese eine weitere noch kleinere Verstärkungsplatine V2 aufgelegt, die mehrere textile Flächengebilde 7' enthält, jeweils eingebunden in eine thermoplastische Kunststoffmatrix. Nachdem die Verstärkungsplatinen V1, V2 exakt positioniert sind, wird eine weitere Grundplatine 1' bestehend aus mehreren textilen Flächengebilden 7, darüber gelegt.

Dieser Schichtaufbau wird gemäß Fig. 10 plastifiziert, bis ein inniger Verbund entsteht und die endgültige Mehrlagenplatine M die Gestalt von Fig. 10 hat, in der die Wandstärke variiert zwischen s1 in einigen Bereichen und s2 bzw. s3 in anderen Bereichen. Diese plastizifierte - im wesentlichen ebene - Mehrlagenplatine M wird dann entweder direkt in die Form überführt, oder abgekühlt und gelagert, um zum Umformen später neuerlich plastifiziert und erst dann in die Form eingebracht zu werden. In den Ausführungsbeispielen sind durchgehende Verstärkungsplatinen und durchgehende Grundplatinen gezeigt. Es ist jedoch möglich, sowohl die Grundplatine als auch die Verstärkungsplatine mit Unterbrechungen oder Ausschnitten zu gestalten, um die Variationsbreite des Wandstärkenverlaufes zu erweitern.

Bei einer Serienproduktion von Hochleistungs-Schalenbauteilen aus thermoplastischem Faserverbundkunststoff kann zum Herstellen der Mehrlagenplatinen eine einfache Vorrichtung eingesetzt werden, die durch eine Steuerung (einen Rechner) geführte Transport- und Positioniermechanismen für die Verstärkungs- und die Grundplatinen aufweist. Mit dieser Vorrichtung könnte eine Zuschneide- oder Stanzvorrichtung zum Bilden der Verstärkungsplatinen kombiniert sein. Die Vorrichtung kann im Takt synchronisiert mit dem Umformzyklus arbeiten.

## Patentansprüche

1. Verfahren zum Herstellen eines funktionellen Hochleistungs-Schalenbauteils aus thermoplastischem Faserverbundkunststoff durch Umformen wenigstens einer durch Temperatureinwirkung plastizifierten, aus mehreren übereinanderliegenden textilen Flächengebilden und einer thermoplastischen Kunststoff-Matrix bestehenden Platine in einem dem Querschnitts- und Wandstärkenverlauf des Schalenbauteils (S) entsprechenden Formhohlraum (9a, 9b), **dadurch gekennzeichnet, daß** vor dem Umformen aus wenigstens einer Grundplatine (1) und wenigstens einer gegenüber der Grundplatine (1) kleineren Verstärkungsplatine (V1, V2, V3) wenigstens eine Mehrlagenplatine (M) hergestellt wird, in der die Verstärkungsplatine (V1, V2, V3) und die Grundplatine (1) relativ zueinander positioniert und vor oder nach dem Positionieren durch Erwärmen plastifiziert werden.

2. Verfahren nach Anspruch 1, **dadurch gekennzeichnet, daß** die Verstärkungsplatine (V1, V2, V3) nach dem Positionieren durch Erwärmen bis zur Plastifizierung und/oder durch Kleben an der gegebenenfalls plastizifierten Grundplatine (1) fixiert wird.

3. Verfahren nach Anspruch 2, **dadurch gekennzeichnet, daß** unter Druckeinwirkung fixiert wird.

4. Verfahren nach Anspruch 1, **dadurch gekennzeichnet, daß** die Mehrlagenplatine (M) in einem in seiner Weite auf den variierendem Querschnittsverlauf im Schalenbauteil (S) abgestimmten Formhohlraum (9a, 9b, 10, 11, 12) umgeformt wird.

5. Verfahren nach Anspruch 1, **dadurch gekennzeichnet, daß** die Mehrlagenplatine (M) in ebener Form vorgefertigt und zum Umformen außerhalb oder im Formhohlraum plastifiziert wird.

6. Verfahren nach Anspruch 1, **dadurch gekennzeichnet, daß** die Mehrlagenplatine (M) beim Plastifizieren vorgefertigt wird.

7. Verfahren nach Anspruch 1, **dadurch gekennzeichnet, daß** die Mehrlagenplatine (M) nach dem Plastifizieren der wenigstens einen Grundplatine (1) und der wenigstens einen Verstärkungsplatine (V1, V2, V3) gefügt wird.

8. Platine aus thermoplastischem Faserverbundkunststoff zum Herstellen eines funktionellen Hochleistungs-Schalenbauteils durch Umformen in einem Formhohlraum unter Anwendung von Druck und Temperatur, **dadurch gekennzeichnet, daß** die Platine eine Mehrlagenplatine (M) ist, die wenigstens eine Grundplatine (1) aus mehreren, übereinanderliegenden textilen Flächengebilden (7) und einer Thermoplast-Kunststoff-Matrix (6) und in wenigstens einem Bereich größerer Wandstärke (s2, s3) als die Wandstärke (s1) in der Grundplatine (1) zusätzlich wenigstens eine gegenüber der Grundplatine (1) kleinere Verstärkungsplatine (V1, V2, V3) aus mehreren übereinanderliegenden textilen Flächengebilden (7', 7") umfasst, wobei die Teile der Mehrlagenplatine (M) relativ zueinander positioniert und aneinander fixiert sind.

9. Platine nach Anspruch 8, **dadurch gekennzeichnet, daß** die an der Grundplatine (1) positionierte Verstärkungsplatine (V1, V2, V3) von der Grundplatine (1) verschieden ist durch wenigstens eine der folgenden strukturellen Eigenschaften: einen anderen thermoplastischen Kunststoff in der Thermoplast-Kunststoff-Matrix, eine andere Art des Fasermaterials (Glas, Kohlenstoff oder ein anderes hochfestes Material), eine andere Art der textilen Flächengebilde (Gewebe, Gewirk, Gelege, Gestrick), und/oder eine andere Faserrichtung.

10. Funktioneller Hochleistungs-Schalenbauteil (S) aus thermplastischem Faserverbundkunststoff, der durch Umformen wenigstens einer unter Temperatureinwirkung plastifizierten, aus mehreren übereinanderliegenden textilen Flächengebilden (7) und einer thermoplastischen Kunststoff-Matrix (6) bestehenden Platine in einem Formhohlraum unter Einwirkung von Druck hergestellt ist, **dadurch gekennzeichnet, daß** der Hochleistungs-Schalenbauteil (S) aus wenigstens einer Mehrlagenplatine (M), bestehend aus wenigstens einer Grundplatine (1) aus mehreren übereinanderliegenden textilen Flächengebilden (7) und einer Thermoplast-Kunststoff-Matrix (6) und in wenigstens einem Bereich größerer Wandstärke als in der Grundplatine aus wenigstens einer gegenüber der Grundplatine (1) kleineren Verstärkungsplatine (V1, V2, V3), bestehend aus mehreren übereinanderliegenden textilen Flächengebilden (7', 7") und einer Thermoplast-Kunststoff-Matrix (6', 6"), hergestellt ist und wenigstens einen belastungsorientiert ausgebildeten und positionierten Bereich (2, 3, 4) aufweist, in dem zumindest die Wandstärke (s2, s3) verschieden ist von der Wandstärke (s1) in einem Grundkörperbereich (1').

11. Funktioneller Hochleistungs-Schalenbauteil nach Anspruch 10, **dadurch gekennzeichnet, daß** er in den Bereichen mit größeren Wandstärken (s2, s3) als der Wandstärke (s1) zusätzlich wenigstens eine der nachfolgenden strukturellen Eigenschaften im Vergleich mit den strukturellen Eigenschaften in Grundkörper-Bereichen (1') mit der geringen Wandstärke (s1) aufweist: Einen anderen thermoplastischen Kunststoff der Kunststoff-Matrix, eine andere Art des Fasermaterials, eine andere Art des textilen Flächengebildes und/oder eine andere Faserrichtung in den textilen Flächengebilden.

## Claims

1. A process for manufacturing a functional heavy-duty shell component from thermoplastic fibrous composite synthetic material by reshaping at least one panel, which has been plastified by the influence of temperature and which consists of several superimposed textile planar structures and a thermoplastic polymer matrix, in a mould cavity (9a, 9b) corresponding to the cross-sectional and wall-thickness contours of the shell component (S), **characterised in that** prior to the reshaping at least one multilayer panel (M) is manufactured from at least one base panel (1) and at least one stiffening panel (V1, V2, V3) which is smaller than the base panel (M), in which multilayer panel the stiffening panel (V1, V2, V3) and the base panel (1) are positioned relative to one another and are plastified by heating prior to or after the positioning.

2. Process according to Claim 1, **characterised in that** after being positioned the stiffening panel (V1, V2, V3) is fixed to the base panel (1), which has been plastified where appropriate, by heating until plastification occurs and/or by adhesive bonding.

3. Process according to Claim 2, **characterised in that** fixing is effected under the influence of pressure.

4. Process according to Claim 1, **characterised in that** the multilayer panel (M) is reshaped in a mould cavity (9a, 9b, 10, 11, 12) which is matched in its width to the varying cross-sectional contour in the shell component (S).

5. Process according to Claim 1, **characterised in that** the multilayer panel (M) is prefabricated in flat form and is plastified with a view to reshaping outside or inside the mould cavity.

6. Process according to Claim 1, **characterised in that** the multilayer panel (M) is prefabricated in the course of plastifying.

7. Process according to Claim 1, **characterised in that** the multilayer panel (M) is assembled after plastification of the at least one base panel (1) and the at least one stiffening panel (V1, V2, V3).

8. A panel formed from thermoplastic fibrous composite synthetic material for manufacturing a functional heavy-duty shell component by reshaping in a mould cavity subject to application of pressure and temperature, **characterised in that** the panel is a multilayer panel (M) which comprises at least one base panel (1) formed from several superimposed textile planar structures (7) and a thermoplastic polymer matrix (6) and, in at least one region of wall thickness (s2, s3) greater than the wall thickness (s1) in the base panel (1), additionally at least one stiffening panel (V1, V2, V3) which is smaller than the base panel (1) and which is formed from several superimposed textile planar structures (7', 7''), the parts of the multilayer panel (M) being positioned relative to one another and fixed to one another.

9. Panel according to Claim 8, **characterised in that** the stiffening panel (V1, V2, V3) positioned on the base panel (1) is different from the base panel (1) by virtue of at least one of the following structural properties: another thermoplastic synthetic material in the thermoplastic polymer matrix, another type of fibrous material (glass, carbon or another highly resistant material), another type of textile planar structure (woven fabric, warp-knitted fabric, plaited fabric, knit fabric) and/or another direction of the fibre.

10. A functional heavy-duty shell component (S) formed from thermoplastic fibrous composite synthetic material which is manufactured in a mould cavity under the influence of pressure by reshaping at least one panel which has been plastified under the influence of temperature and which consists of several superimposed textile planar structures (7) and a thermoplastic polymer matrix (6), **characterised in that** the heavy-duty shell component (S) is manufactured from at least one multilayer panel (M) consisting of at least one base panel (1) formed from several superimposed textile planar structures (7) and a thermoplastic polymer matrix (6) and, in at least one region of greater wall thickness than in the base panel, of at least one stiffening panel (V1, V2, V3) which is smaller than the base panel (1), consisting of several superimposed textile planar structures (7', 7'') and a thermoplastic polymer matrix (6', 6''), and has at least one load-orientated and positioned region (2, 3, 4) in which at least the wall thickness (s2, s3) is different from the wall thickness (s1) in a base-body region (1').

11. Functional heavy-duty shell component according to Claim 10, **characterised in that** in the regions having wall thicknesses (s2, s3) greater than the wall thickness (s1) it additionally has at least one of the following structural properties in comparison with the structural properties in the base-body region (1') having the small wall thickness (s1) : another thermoplastic synthetic material of the thermoplastic polymer matrix, another type of fibrous material, another type of textile planar structure and/or another direction of the fibres in the textile planar structures.

## Revendications

1. Procédé pour la fabrication d'une coque fonctionnelle haute performance à partir d'un matériau thermoplastique renforcé par des fibres par la déformation d'au moins une platine plastifiée par l'effet de la température, composée de plusieurs éléments plats textiles superposés les uns sur les autres et d'une matrice de matériau synthétique thermoplastique, dans une forme creuse (9a, 9b) correspondant au tracé en coupe transversale et à l'épaisseur de paroi de la coque (S), **caractérisé en ce que**, avant la déformation, au moins une platine à couches multiples (M) est fabriquée, à partir d'au moins une platine de base (1) et au moins une platine de renforcement (V1, V2, V3) plus petite que la platine de base (1), dans laquelle la platine de renforcement (V1, V2, V3) et la platine de base (1) sont positionnées l'une par rapport à l'autre et sont plastifiées par chauffage avant ou après le positionnement.

2. Procédé selon la revendication 1, **caractérisé en ce que** la platine de renforcement (V1, V2, V3), après le positionnement, est fixée sur la platine de base (1) éventuellement plastifiée par le biais d'un chauffage jusqu'à la plastification et/ou d'un collage.

3. Procédé selon la revendication 2, **caractérisé en ce que** la fixation est réalisée par pression.

4. Procédé selon la revendication 1, **caractérisé en ce que** la platine à couches multiples (M) est déformée dans une forme creuse (9a, 9b, 10, 11, 12) concordant dans sa largeur avec le tracé en coupe transversale variable de la coque (S).

5. Procédé selon la revendication 1, **caractérisé en ce que** la platine à couches multiples (M) est préparée dans une forme plane et plastifiée à l'extérieur ou à l'intérieur de la forme creuse aux fins de la déformation.

6. Procédé selon la revendication 1, **caractérisé en ce que** la platine à couches multiples (M) est préparée lors de la plastification.

7. Procédé selon la revendication 1, **caractérisé en ce que** la platine à couches multiples (M) est jointe après la plastification de la platine de base (1), au moins au nombre d'une, et de la platine de renforcement (V1, V2, V3), au moins au nombre d'une.

8. Platine en un matériau thermoplastique renforcé par des fibres pour la fabrication d'une coque fonctionnelle haute performance par déformation dans une forme creuse sous l'effet de la pression et de la température, **caractérisée en ce que** la platine est une platine à couches multiples (M), qui comprend au moins une platine de base (1) composée de plusieurs éléments plats textiles (7) superposés les uns sur les autres et d'une matrice de matériau synthétique thermoplastique (6), et dans au moins une zone une épaisseur de paroi (s2, s3) supérieure à l'épaisseur de paroi (si) dans la platine de base (1), en outre au moins une platine de renforcement (V1, V2, V3) plus petite que la platine de base (1) composée de plusieurs éléments plats textiles (7', 7'') superposés les uns sur les autres, les parties de la platine à couches multiples (M) étant positionnées les unes par rapport aux autres et fixées les unes aux autres.

9. Platine selon la revendication 8, **caractérisée en ce que** la platine de renforcement (V1, V2, V3) positionnée sur la platine de base (1) est différente de la platine de base (1) par au moins une des propriétés structurelles suivantes : un autre matériau thermoplastique dans la matrice de matériau synthétique thermoplastique, un autre type de fibres (verre, carbone ou un autre matériau à haute résistance), un autre type d'éléments plats textiles (tissu, tulle, tricot) et/ou un autre sens des fibres.

10. Coque (S) fonctionnelle haute performance en un matériau thermoplastique renforcé par des fibres, qui est fabriquée par la déformation d'au moins une platine plastifiée par l'effet de la température, composée de plusieurs éléments plats textiles (7) superposés les uns sur les autres et d'une matrice (6) de matériau synthétique thermoplastique, dans une forme creuse sous l'effet de la pression, **caractérisée en ce que** la coque (S) haute performance est fabriquée à partir d'au moins une platine à couches multiples (M), composée d'au moins une platine de base (1) constituée de plusieurs éléments plats textiles (7) superposés les uns sur les autres et d'une matrice (6) de matériau synthétique thermoplastique, et dans au moins une zone avec une épaisseur de paroi supérieure à celle de la platine de base, d'au moins une platine de renforcement (V1, V2, V3) plus petite que la platine de base (1), constituée de plusieurs éléments plats textiles (7', 7'') superposés les uns sur les autres et d'une matrice (6', 6'') de matériau synthétique thermoplastique, et **en ce qu'**elle présente au moins une zone (2, 3, 4) réalisée et positionnée en fonction des contraintes, dans laquelle au moins l'épaisseur de paroi (s2, s3) est différente de l'épaisseur de paroi (s1) dans une zone du corps de base (1').

11. Coque fonctionelle haute performance selon la revendication 10, **caractérisée en ce que**, dans les zones ayant des épaisseurs de parois (s2, s3) supérieures à l'épaisseur de paroi (s1), elle présente en outre au moins une des propriétés structurelles suivantes par rapport aux propriétés structurelles dans des zones du corps de base (1') ayant l'épaisseur de paroi (s1) inférieure : un autre matériau synthétique thermoplastique de la matrice de matériau synthétique, un autre type de fibres, un autre type d'élément plat textile et/ou un autre sens des fibres dans les éléments plats textiles.
